# EUROPEAN PATENT SPECIFICATION

(11) **EP 3 497 049 B1**
(45) Date of publication and mention of the grant of the patent: **24.06.2020**
(21) Application number: 17794215.8
(22) Date of filing: 19.07.2017
(51) Int. Cl.: B67B 3/064, B65G 47/256, B65G 47/84, B07C 5/36

(54) **CAP SORTING DEVICE**
KAPPENSORTIERVORRICHTUNG
DISPOSITIF DE TRI DE CAPSULES

(30) Priority: 12.08.2016 BG 11236216
(43) Date of publication of application: 19.06.2019
(73) Proprietor: "INDEX-6" LTD., 4004 Plovdiv (BG)
(72) Inventor: SPASOV, Petar Georgiev, 4002 Plovdiv (BG); MINCHEV, Evgeni Ivanov, 4000 Plovdiv (BG); YUSEIN, Erol Yusein, 4000 Plovdiv (BG)
(74) Representative: Ilarionov, Pavko Jordanov
(86) International application number: PCT/BG2017/000016
(87) International publication number: WO 2018/027286

(56) References cited:
- FR-A1- 2 961 801
- US-A- 3 244 264
- US-A- 3 463 294

## Description

### Field of invention

The invention is related to a cap sorting device for sorting out multi-component caps incorrectly directed or separated into their constituent parts. The invention shall be applied in the bottling industry.

### Invention background

Container caps are usually fed to the container sealing machines after they have passed through aligners, whose main purpose is to align caps correctly, so that a continuous container sealing process can be achieved. Aligners may not ensure verification and 100% rejection of incorrectly aligned caps and those of poor quality and/or parts thereof. In practice, this often requires the use of more than one aligner, so when the first aligner is stopped to remove the scrap of fed caps, which is often done manually; the second aligner assumes this function.

Any stopping of such container filling and sealing line, especially of line composed of combined machine for moulding blowing, containers filling and sealing leads to unforeseen and substantial losses of time and money.

A device for sorting incorrectly aligned caps, such of poor quality or multi-component caps separated by any reason to their constituent parts is also known. The known device is part of an aligner, to which it is connected and it works synergistically.

The known sorting device (US 3,463,294), which discloses a cap sorting device in accordance with the preamble of claim 1, consists of a bearing stationary disc to which the motor reducer group is attached. A rotating body is situated laterally and above bearing disc, connected to the motor-reducer group, consisting of two connected to each other discs, and alternately humps made on the bottom one. On the periphery of the upper disc, movable dowel retainers are evenly vertically axially mounted. Each retainer is composed of a cylindrical movable body, the bottom part of which is supported by a spherical body. At the same time each spherical body is removably established and supported by the inclined surface of the lower smaller disc of the rotating body.

At the stationary disc, in the direction of movement of the rotating body there are a feeding groove for the aligned caps, an evacuation groove for the incorrectly aligned caps and an evacuation groove for the correctly aligned caps.

During the device operation, depending on how the cap is faced, the spherical bodies of the retainer fall or do not fall into the hole of the cap and depending on this they are conveyed in one of the two grooves for caps discharging.

The known device is connected with mounted rotary caps aligner in front of it and its work is synchronized with the operation of this aligner.

No sorting of individual components of composite caps may also be implemented by the known device.

At the same time construction of the known device is complicated by difficult-to-manufacture form of bottom smaller disk.

### Summary of invention

Invention object is to create a device for sorting (verification and separation) of multi-caps incorrectly aligned and / or separated into their constituent parts, which device can operate independently of the related to a production line aligner.

This task is solved by a cap sorting device in accordance with claim 1.

At the stationary disc surface, in the direction of movement of the rotating disc there are consecutively arranged feeding groove for the aligned caps, evacuation groove for the incorrectly aligned caps and evacuation groove for the correctly aligned caps.

According to the invention in the upper ends of the dowel retainers there are magnets mounted.

First and second control sectors are set above the rotating disc, made of a ferromagnetic material, mounted adjustably to the stationary disc.

A removable format part is set between the bearing and the rotating disc, on which periphery caps seats are symmetrically shaped. Format part is connected to the rotating disc.

Stationary side removable spacers are set along the periphery and on the stationary disc, among the three cap grooves, in the direction of movement of the rotating disc.

Size and shape of the seats of format parts and removable side spacers are adapted to the cap size and shape.

Each retainer is composed of a cylindrical and movable body, at the bottom of which there is a circlip shaped, followed by a cone and at the upper end of the cylindrical body there is a magnet mounted. The cylindrical body itself is set axially movable in a guiding sleeve, mounted in the rotating disc. A return spring is mounted around the cylindrical body, between its circlip and its bearing disc.

According to an alternative embodiment of the cap sorting device, nozzles for supplying compressed air are mounted to the bottom surface of the bearing disc, thus assisting separation of the caps to the respective discharging grooves.

According to another alternative embodiment of cap sorting device, a raised or recessed undulated part is formed on the stationary disc, in front of the groove for incorrectly aligned caps.

The advantage of the device created is that it allows implementing continuous sorting of aligned caps, thus ensuring uninterrupted operation of production lines, especially those that are composed of a combined machine for blow moulding, filling and sealing containers.

Another advantage of the proposed device is that it operates independently of the aligner installed in front of it and there is no need of synchronizing their operation.

### Attached figures description

Present invention is illustrated by the attached figures, where:
- Figure 1 represents a perspective view of the cap sorting device - a top view;
- Figure 2 - a perspective view of the cap sorting device - a bottom view;
- Figure 3 - a semi-sectional perspective view of the device;

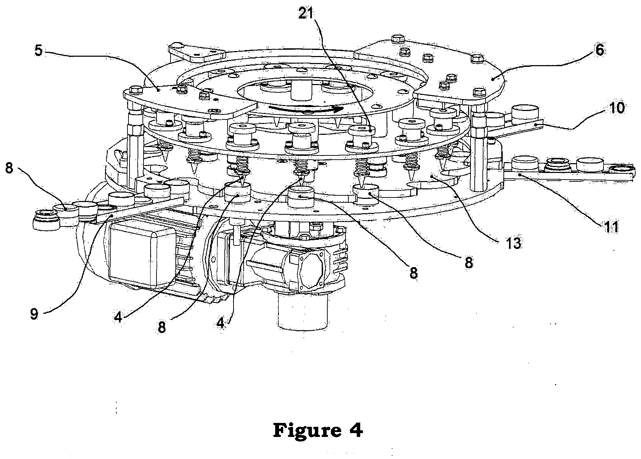

- Figure 4 - closer view of a part of the device, and
Figure 5 - a perspective view of the cap sorting device, clarifying the operation principle.

### Invention embodiment

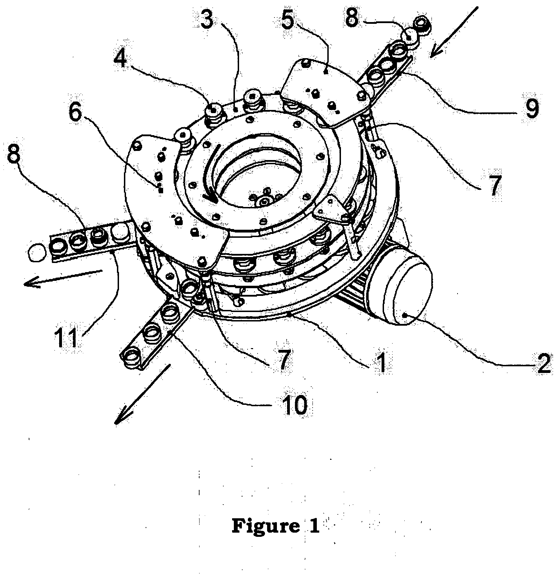

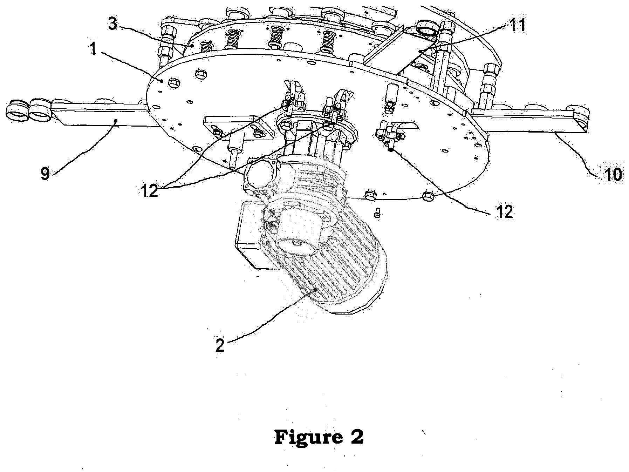

The cap sorting device comprises a stationary bearing disc 1, to which a motor reducer group 2 is attached - figure 1 and figure 2. A rotating disc 3 is connected to the motor reducer group 2, above the stationary bearing disc 1. Movable dowel retainers 4 are evenly mounted along the periphery of the rotating disc 3.

First control sector 5 and second control sector 6 are set above the rotating disc 3, which are fixed by means of adjustable brackets 7 fixed to the bearing disc 1. The two control sectors 5 and 6 are made of a ferromagnetic material such as iron.

Radially to the upper surface of the stationary bearing disc 1, there are three cap grooves 8: aligned cap feeding groove 9; correctly aligned cap discharging groove - 10; and incorrectly aligned cap and also for caps of poor quality and / or parts thereof discharging groove 11. The incorrectly aligned caps discharging groove -11 is located between the cap feeding groove - 9 and the correctly aligned cap discharging groove - 10, along the direction of movement of the rotating disc 3, which is counter clockwise - figure 1.

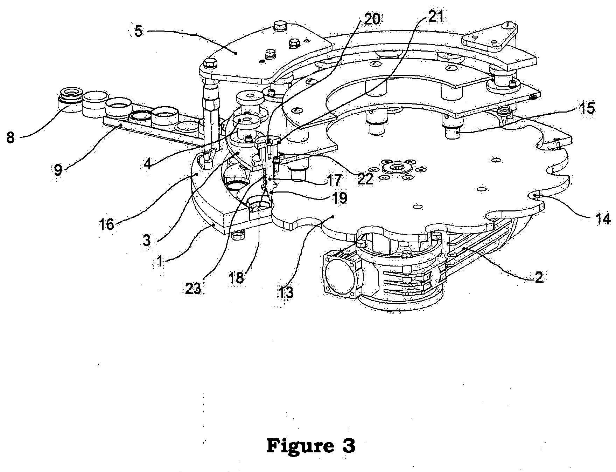

A format removable part 13 is set between the stationary bearing disc 1 and the rotating disc 3, on which periphery cap seats 14 (stars) are symmetrically formed - figure 3. The format part 13 is connected to the rotating disc 3 by means of columns 15.

Two removable side spacers 16 are stationary set between the three grooves (9, 10 and 11) along the periphery and on the stationary disc 1, in the direction of movement of the rotating disc 3 - figure 3.

Size and shape of the seats 14 of format part 13 and removable side spacers 16 are adapted to the size and shape of the caps 8.

Each retainer 4 consists of a movable cylindrical body 17, at the bottom of which a circlip 18 is shaped, followed by a fixing cone 19 - figure 3. A permanent magnet 21 is mounted by a fastener 20 at the top of the cylindrical body 17. The cylindrical body 17 of the retainer 4 is set axially movably in guide sleeve 22 that is mounted in an opening made in the rotating disc 3. The guide sleeve 22 is attached to the movable disc 3. Around cylindrical body 17 between the disc 3 and the circlip 18 is mounted on a cylindrical return spring 23.

In one alternate embodiment of the device, nozzles 12 for supplying the compressed air are mounted to the bottom surface of the bearing disc 1 - figure 2.

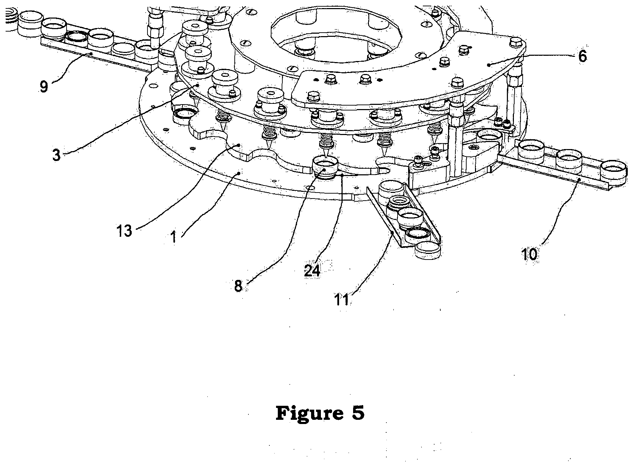

In another alternate embodiment of the device, a slightly raised or recessed undulating part 24, that serves to unbalance the movement of individual parts of the caps 8 for their separation to the groove for incorrectly aligned and unsuitable caps 11, is formed on the stationary disc 1 in front of groove 11 - figure 5.

**The operating principle of the device is as follows:**
Motor reducer group 2 imparts a rotational movement of the rotating disc 3 and any connected elements. When operating the device, disc 3 rotates counter clockwise - figure 1.

The caps 8 that are previously aligned by an appropriate aligner (not shown in the attached figures) are fed via the cap feeding groove 9 to the sorting device. The objective is to ensure 100% correctly aligned caps 8, which are then submitted to the capping machine. Correctly aligned cap in this case is fed by its opening up and its bottom respectively down. 100% correct alignment, however, has never been possible to be implemented by any aligner and especially in composite caps which can disintegrate during their alignment.

After cap feeding groove 9, caps are accepted by the format part 13 connected to the rotating disc 3 and fall between its seats 14 and side spacer 16 - figure 3. The seat shape 14 corresponds to the shape of each cap 8.

The retainer 4 is designed to hold the caps 8 to the bearing stationary disc 1 and put in a certain place. This is accomplished using a permanent magnet 21 and cylindrical return spring 23. The magnet 21 lifts the retainer 4 at the device inlet, overcoming the force of the return spring 23 under the influence of magnetic forces of attraction to control sectors 5 and 6, which are made of suitable material. Once the retainer 4 comes out of the corresponding control sector 5 or 6, the magnetic force disappears, and the return spring 23 presses it down, thereby fixing the cap 8. For correct lifting the distance between control sectors 5 and 6 and the magnets 21 is pre-adjusted.

Once the area of control sector 6 is bypassed, the retainers 4 are returned to their lower position by the spring 23, thus fixed and correctly aligned caps 8 are displayed by correctly aligned cap groove 10 - figure 1. The caps pass into the groove 10 under the influence of gravitational or centrifugal force or they are blown by means of compressed air fed by the nozzles 12 or a combination of three forces. After the groove 10, caps 8 are fed to the capping machine - not shown in the attached figures.

In the presence of caps 8, which are not aligned by the aligner in the desired direction, i.e. those that are aligned upside down, they are secured by retainers 4. While passing through the second control sector 6, the retainer 4 is pulled to the control sector 6, thanks to the power of attraction between control sector 6 and the magnet 21 to the position in which the non aligned cap is released and led to incorrectly aligned cap groove 11 - figure 1.

In cases where components of a cap 8 have fallen in the device, they are led to the incorrectly aligned cap discharge groove 11. This happens automatically while running due to the large difference in height, which occurs between assembled and disassembled state and due to centrifugal forces and / or under the influence of the compressed air supplied by the nozzles 12 - figure 2.

If the higher part of a separated cap 8, which is lower than normal assembled cap and if it is opening up, is fed to the device, the retainer 4 did not fix it enough and when the part reaches the undulating part 24 representing a "trap" for these parts, its movement is unbalanced, and it is pulled out the seat 14 and the part is directed to the incorrectly aligned cap discharge groove 11 and is led out of the device.

## Claims

1. **A cap sorting device,** comprising a bearing stationary disc (1) to which a motor-reducer group (2) is attached, that, above the bearing stationary disc (1), is connected to a rotating disc (3), on the periphery of which evenly vertically axially movable dowel retainers (4) are mounted, and aligned cap feeding groove (9) incorrectly aligned cap discharging groove (11) and correctly aligned cap discharging groove (10) are located on the surface of the bearing stationary disc (1), **characterized in that** in top ends of the dowel retainers (4) there are magnets (21) mounted and above the rotating disc (3) the first (5) and the second control (6) sectors are set, made of ferromagnetic material, mounted adjustably to the bearing stationary disc (1) and between the bearing stationary disc (1) and the rotating disc (3) a removable format part (13) is set; at its periphery there are symmetrically shaped seats (14) for the caps; that removable format part (13) is connected to the rotating disc (3) so that the motor-reducer group (2) imparts a rotational movement on the rotating disc (3) and its connected elements, wherein along the periphery and on the stationary disc (1) between said three cap grooves (9, 10, 11) stationary removable side spacers (16) are fixed, in the direction of movement of the rotating disc (3), the size and shape of the seats (14) of the removable format part (13) and the removable side spacers (16) are adapted to the size and shape of the caps (8), the device being configured such that after the cap feeding groove (9), the caps are accepted by the removable format part (13) and fall between its seats (14) and one of the side spacers (16), the device further being configured such that the dowel retainer (4) is designed to hold the caps (8) to the bearing stationary disc (1) by means of said magnets (21) and respective cylindrical return springs (23) of each dowel retainer (4), wherein the magnet (21) is adapted to lift the dowel retainer (4) at the device inlet, overcoming the force of the return spring (23) under the influence of magnetic forces of attraction to each of the first (5) and the second (6) control sectors, wherein when the dowel retainer (4) comes out of the corresponding control sector (5, 6), the magnetic force disappears and the return spring (23) presses it down, thereby fixing the cap, wherein once the area of the respective control sector (6) is bypassed, the dowel retainers (4) are returned to their lower position by the spring and correctly aligned caps (8) are displayed by correctly-aligned cap groove (10).

2. **Cap sorting device, according to claim 1, characterized in that** each retainer (4) is composed of a cylindrical and movable body (17), at the bottom of which a circlip (18) is shaped followed by cone, and at the top end of the cylindrical body (17) there is a magnet mount, and the mere cylindrical body (17) is established axially movable in a guide sleeve (22) mounted in the rotating disc (3), wherein said return spring (23) is mounted around the cylindrical body (17) between its circlip (18) and the rotating disc (3) .

3. **Cap sorting device, according to claim 1, characterized in that** to the bottom surface of the bearing stationary disc (1), nozzles (12) supplying compressed air are mounted.

4. **Cap sorting device, according to claim 1, characterized in that** on the bearing stationary disc (1) in front of the incorrectly aligned cap groove (11) a raised or recessed undulating part (24) is formed.

## Patentansprüche

1. **Die Kappensortiervorrichtung** besteht aus einer feststehenden Scheibe (1), woran eine Motor-und Reduktorgruppe (2) angebracht ist, welche über der tragenden feststehenden Scheibe (1), mit einer rotierenden Scheibe (3) verbunden ist, an deren Peripherie senkrecht, gleichmäßig verteilt achsenbewegliche zentrierende Halterungen (4) eingebaut sind, wobei sich an der Oberfläche der feststehenden Scheibe (1) hintereinander eine Zufuhrrinne (9), eine Abfuhrrinne für den Abfuhr von nicht richtig orientierten Kappen (11) sowie eine Abfuhrrinne für den Abfuhr von richtig orientierten Kappen (10) befinden,
**und kennzeichnet sich dadurch, dass**
an den oberen Rändern der zentrierenden Halterungen (4) Magnete (21) angebracht sind, und über der rotierenden Scheibe (3) der erste (5) und der zweite leitende Sektor (6) eingebaut sind, welche aus ferromagnetem Stoff ausgearbeitet sind und justierbar an der tragenden feststehenden Scheibe (1) montiert sind, wobei zwischen der tragenden feststehenden Scheibe (1) und der rotierenden Scheibe (3) ein auswechselbarer Formatteil (13) eingebaut ist, an dessen Peripherie symmetrisch Neste (14) für die Kappen ausgeformt sind, indem der Formatteil (13) mit der rotierenden Scheibe (3) verbunden ist, so dass die Motor- und Reduktorgruppe (2) eine Drehbewegung der rotierenden Scheibe (3) und der damit verbundenen Elementen verleiht, wobei an und auf der Peripherie der tragenden feststehenden Scheibe (1) zwischen den drei Kappenrinnen (9, 10 und 11) unbeweglich auswechselbare Seitenbegrenzer (16) eingebaut worden sind, welche in die Fahrrichtung der rotierenden Scheibe (3) fixiert sind, wobei die Größe und die Form der Neste (14) des Formatteils (13) und der auswechselbaren Seitenbegrenzer (16) an die Größe und der Form der Kappen (8) angepasst sind, indem die Vorrichtung so konfiguriert ist, dass nach der Zufuhrrinne (9), die Kappen von dem auswechselbaren Formatteil (13) aufgenommen werden und zwischen ihre Neste (14) und die Seitenbegrenzer (16) geraten, wobei die Vorrichtung zusätzlich so konfiguriert worden ist, dass die zentrierenden Halterungen (4) für die Befestigung der Kappen (8) zur tragenden feststehenden Scheibe (1) mit der Hilfe der oben genannten Magneten (21) und der jeweiligen Zylinderfederung (23) einer jeden zentrierenden Halterung (4) entworfen worden sind, wobei jeder Magnet (21) dafür geeignet ist, die zentrierende Halterung (4) am Eingang der Vorrichtung zu heben, indem er die Kraft der Rückschlagfederung (23) unter dem Einfluss von den Magnetkräften der Festklemmung zu jedem des ersten (5) und des zweiten (6) Kontrollsektoren überwindet, wobei wenn die zentrierende Halterung (4) aus dem jeweiligen Kontrollsektor (5, 6), herauskommt, die Magnetkraft verschwindet und die Rückschlagfederung (23) ihn drückt und die Kappe fixiert, wobei nachdem die Zone des jeweiligen Kontrollsektor (6) umringt worden ist, die zentrierenden Halterungen (4) zu ihrer unteren Lage durch die Federung zurückgehen, indem die richtig eingeebneten Kappen (8) über die Abfuhrrinne für den Abfuhr von richtig orientierten Kappen (10) abgeführt werden.

2. **Kappensortiervorrichtung laut Anspruch 1, die sich dadurch kennzeichnet, dass** jede Halterung (4) aus einem zylindrischen und mobilen Teil (17) besteht, in dessen unterem Teil ein Sicherungsring (18) ausgeformt ist, danach gibt es auch einen Konus und im oberen Teil des zylindrischen Teils (17) ist ein Magnet (21) angebracht, wobei der zylindrische Teil selbst (17) axial mobil in der führenden Hülse (22) eingebaut ist, welche in der rotierenden Scheibe (3) montiert ist, wobei um den zylindrischen Teil (17), zwischen seinem Sicherungsring (18) und der tragenden Scheibe (3) eine Rückschlagfederung (23) angebracht ist.

3. **Kappensortiervorrichtung laut Anspruch 1, die sich dadurch kennzeichnet, dass** an der unteren Oberfläche der tragenden feststehenden Scheibe (1), Düsen (12) zum Zwecke einer Druckluftzufuhr angebracht worden sind.

4. **Kappensortiervorrichtung laut Anspruch 1, die sich dadurch kennzeichnet, dass** auf der tragenden feststehenden Scheibe (1), vor der Abfuhrrinne für den Abfuhr von nicht richtig orientierten Kappen (11) ein gehobener oder hohler wellenartiger Teil (24) ausgeformt worden ist.

## Revendications

1. **Dispositif de tri de capsules,** comprenant un disque fixe de support (1) auquel est fixé un groupe moto-réducteur (2), qui, au-dessus du disque fixe de support (1), est relié à un disque rotatif (3), sur la périphérie duquel sont montés verticalement, uniformément, des fixateurs de centrage axialement mobiles (4), sur la surface du disque fixe de support (1), étant consécutivement disposés une rainure d'alimentation en capsules (9), une rainure d'évacuation de capsules incorrectement orientées (11) et une rainure d'évacuation de capsules correctement orientées (10),
**caractérisé en ce que**
dans les extrémités supérieures des fixateurs de centrage (4) sont montés des aimants (21) et au-dessus du disque rotatif (3) sont placés le premier (5) et le deuxième (6) secteurs de commande, faits en matériau ferromagnétique, montés de manière réglable sur le disque fixe (1) et entre le disque fixe de support (1) et le disque rotatif (3) est placée une pièce de format amovible (13); sur la périphérie de laquelle sont symétriquement formés des sièges (14) pour les capsules, laquelle pièce de format (13) est reliée au disque rotatif (3) de sorte que le groupe moto-réducteur (2) transmet un mouvement de rotation au disque rotatif (3) et aux éléments qui y sont reliés, dans lequel sur la périphérie de et sur le disque fixe (1) entre lesdites trois rainures à capsules (9, 10, 11) sont placées de manières fixe des entretoises latérales amovibles (16), fixées en direction du mouvement du disque rotatif (3), la taille et la forme des sièges (14) de la pièce de format (13) et des entretoises latérales amovibles (16) étant adaptées à la taille et à la forme des capsules (8), le dispositif étant configuré de telle sorte qu'après la rainure d'alimentation en capsules (9), les capsules sont acceptés par la pièce de format amovible (13) et tombent entre ses sièges (14) et les entretoises latérales (16), le dispositif étant en outre configuré de telle sorte que les fixateurs de centrage (4) sont conçus pour fixer les capsules (8) sur le disque fixe de support (1) à l'aide desdits aimants (21) et des ressorts cylindriques respectifs (23) de chaque fixateur de centrage (4), dans lequel chaque aimant (21) est adapté pour soulever le fixateur de centrage (4), à l'entrée du dispositif, en surmontant la force du ressort de rappel (23) sous l'influence des forces magnétiques d'attraction vers chacun des premier (5) et deuxième (6) secteurs de commande, dans lequel, lorsqu'un fixateur de centrage (4) sort du secteur de commande correspondant (5,6), la force magnétique disparaît et le ressort de rappel (23) le presse vers le bas, fixant ainsi la capsule, dans lequel, une fois que la zone du secteur de commande respectif (6) est contournée, les fixateurs de centrage (4) sont ramenés à leur position inférieure par le ressort et les capsules correctement alignés (8) sont emmenées par la rainure de conduite de capsules correctement orientées (10).

2. **Dispositif de tri de capsules, selon la revendication 1, caractérisé en ce que** chaque fixateur (4) est composé d'un corps cylindrique et mobile (17), au bas duquel est formé un anneau de retenue (18), suivi d'un cône, et à l'extrémité supérieure du corps cylindrique (17) est monté un aimant (21), le corps cylindrique (17) même étant placé axialement mobile dans un guide d'anneau d'étanchéité (22) monté dans le disque rotatif (3), un ressort de rappel (23) étant monté autour du corps cylindrique (17) entre son anneau de retenue (18) et le disque rotatif (3).

3. **Dispositif de tri de capsules, selon la revendication 1, caractérisé en ce que** des buses (12) d'approvisionnement en l'air comprimé sont montées sur la surface inférieure du disque fixe (1).

4. **Dispositif de tri de capsules, selon la revendication** 1, **caractérisé en ce que** sur le disque fixe de support (1), avant la rainure à capsules incorrectement orientées (11), est formée une partie ondulée en relief ou en creux (24.
